# EUROPÄISCHE PATENTSCHRIFT

(11) **EP 1 361 682 B1**
(45) Veröffentlichungstag und Bekanntmachung des Hinweises auf die Patenterteilung: **27.06.2007**
(21) Anmeldenummer: 03010330.3
(22) Anmeldetag: 08.05.2003
(51) Int. Cl.: H04B 10/10, G08C 23/04

(54) **Verfahren zur drahtlosen Datenübertragung**
Method for wireless data transmission
Méthode de transmission de données sans fil

(30) Priorität: 10.05.2002 DE 10220723
(43) Veröffentlichungstag der Anmeldung: 12.11.2003
(73) Patentinhaber: Diehl AKO Stiftung & Co. KG, 88239 Wangen (DE)
(72) Erfinder: Hammelsbacher, Karlheinz, 91189 Rohr (DE); Depser, Ulrich, 90449 Nürnberg (DE)
(74) Vertreter: Diehl Patentabteilung

(56) Entgegenhaltungen:
- WO-A-99/26364
- US-A- 5 808 760
- US-A- 5 818 826

## Beschreibung

Die Erfindung betrifft ein Verfahren zur drahtlosen Datenübertragung nach dem Oberbegriff des Patentanspruchs 1, ein dieses Verfahren verwendendes Verfahren zur drahtlosen Programmierung eines Steuergerätes sowie ein Steuergerät zur Durchführung des Verfahrens zur drahtlosen Programmierung eines Steuergerätes.

In zahlreichen Gebieten der Technik werden digitale Daten drahtlos per Infrarot-Strahlung übertragen. Die übertragenen Daten dienen dabei oft der Steuerung von Elektrogeräten oder auch der Programmierung von entsprechenden Steuergeräten.

Für eine erfolgreiche Datenübertragung ist es dabei notwendig, dass Infrarot-Sender und Infrarot-Empfänger derart aufeinander abgestimmt sind, dass sie mit derselben Datenübertragungsgeschwindigkeit arbeiten. Somit ist zwischen Sendern und Empfängern, die mit unterschiedlichen Übertragungsgeschwindigkeiten arbeiten, eine Datenübertragung nicht möglich.

Ein solches Datenübetragungssystem, bei dem Sender und Empfänger mit der gleichen Übertragungsgeschwindigkeit (Datenrate) arbeiten, ist zum Beispiel in dem US-Patent Nr. 5,808,760 beschrieben. Um bei der Datenübertragung die Fehlerrate zu minimieren bzw. das Signal/Rausch-Verhältnis zu verbessern, wird bei diesem herkömmlichen System die Datenrate reduziert, indem die Daten vom Sender mehrfach übertragen werden und der Empfänger die empfangenen Signale mittelt. Eine Datenübertragung zwischen einem Sende rund einem Empfänger, die mit unterschiedlichen Übertragungsgeschwindigkeiten arbeiten, ist auch bei diesem bekannten System nicht möglich.

Ausgehend von dem genannten Stand der Technik ist es Aufgabe der Erfindung, ein Verfahren zur drahtlosen Datenübertragung, ein Verfahren zur drahtlosen Programmierung eines Steuergerätes sowie ein Steuergerät zur Durchführung letzteren Verfahrens vorzuschlagen, bei welchen Sender und Empfänger nicht mit derselben Datenübertragungsgeschwindigkeit arbeiten.

Gelöst wird diese Aufgabe durch ein Verfahren zur drahtlosen Datenübertragung mit den Merkmalen des Patentanspruchs 1, ein Verfahren zur drahtlosen Programmierung eines Steuergerätes mit den Merkmalen des Patentanspruchs 5 sowie ein Steuergerät zur Durchführung des letzteren Verfahrens nach Patentanspruch 7. Ausgestaltungen und Weiterbildungen der Erfindung ergeben sich aus den Unteransprüchen.

Durch eine drahtlose Datenübertragung, bei welcher die Übertragungsgeschwindigkeit des Senders ein Mehrfaches der Übertragungsgeschwindigkeit des Empfängers beträgt und der Empfänger den Empfang eines einzelnen Datenbits über mehrere gesendete Datenbits mittelt, wird die Verwendung von Infrarot-Sendern und Infrarot-Empfängern ermöglicht, welche nicht mit der selben Übertragungsgeschwindigkeit arbeiten.

Um einen digitalen 1-Wert (d. h. ein HIGH-Bit) zu übertragen, sendet der Infrarot-Sender eine Anzahl von Signalen, die überwiegend aus digitalen 1-Werten (also HIGH-Bits) bestehen. Der Empfänger mittelt bzw. integriert über diese Anzahl von gesendeten Datenbits und bestimmt aus dem Mittelwert den Wert des einen empfangenen Datenbits. Zur Übertragung eines digitalen 0-Wertes (also LOW-Bit) sendet der Infrarot-Sender eine Anzahl von Signalen, die überwiegend aus digitalen 0-Werten (d. h. LOW-Bits) bestehen. Auch diese gesendeten Datenbits mittelt bzw. integriert der Infrarot-Empfänger und bestimmt aus dem Mittelwert den Wert des empfangenen Datenbits.

Zur Übertragung eines digitalen 0-Wertes (LOW-Bit) kann auch vorgesehen sein, dass vom Sender für eine gewisse Zeit gar kein Signal gesendet wird.

Die Anzahl der gesendeten Signale pro zu empfangenden Datenbit entspricht vorzugsweise dem Verhältnis der Übertragungsgeschwindigkeit des Senders zu der des Empfängers. Die Übertragungsgeschwindigkeit des Senders liegt vorzugsweise zwischen 10.000 und 40.000 bps (Bits per Second), die des Empfängers zwischen 100 und 200 bps.

Für ein Verfahren zur drahtlosen Programmierung eines Steuergerätes werden digitale Daten mittels des obengenannten Verfahrens zur drahtlosen Datenübertragung übertragen und dienen der Programmierung des Steuergerätes.

In einer bevorzugten Ausführungsform wird als Steuergerät eine sensorgeführte Herdsteuerung und zur Programmierung dieser Herdsteuerung ein mobiler, eine nach dem IrDA-Standard arbeitende Infrarot-Schnittstelle aufweisender Computer - beispielsweise ein Laptop oder ein PDA (personal digital assistant, ein sogenannter Hand-held-Computer) - verwendet. Dabei weist die Herdsteuerung in ihren berührungsempfindlichen Sensoren, welche der Bedienung des Herdes dienen, mindestens einen Infrarot-Empfänger auf. Dieser wird als Infrarot-Empfänger zum Datenempfang verwendet. Die empfangenen Daten werden in der Herdsteuerung gespeichert und programmieren die Herdsteuerung in der Hinsicht, dass diese mit dem angeschlossenen Herd abgeglichen und auf diesen eingestellt wird.

Ein Steuergerät zur Durchführung des letztgenannten Verfahrens weist einen Infrarot-Empfänger, eine Datenschnittstelle und einen programmierbaren Speicher auf. Vorzugsweise ist es als sensorgeführte Herdsteuerung ausgeführt.

Im folgenden wird die Erfindung anhand eines Ausführungsbeispiels näher erläutert. In der Zeichnung zeigen
**Figur 1** ein Blockschaltbild einer Vorrichtung zur Durchführung der Verfahren und
**Figur 2** einen beispielhaften Signalverlauf bei der Durchführung der Verfahren.

Ein Küchenherd (1) ist an eine Herdsteuerung (2) angeschlossen, welche einen Infrarot-Empfänger (3) aufweist. Dieser Infrarot-Empfänger (3) ist Teil eines berührungsempfindlichen Sensors, welcher im Normalbetrieb der Bedienung des Herdes dient. Weiterhin weist die Herdsteuerung (2) eine Datenschnittstelle (4) und einen programmierbaren Speicher (5) auf.

Die Herdsteuerung (2) ist so ausgeführt, dass sie verschiedene Typen von Kochherden (1) steuern kann. Dazu wird in ihrem Speicher (5) hinterlegt, welcher Herdtyp angeschlossen ist.

Zur Programmierung des Speichers (5) wird ein sogenannter Hand-held-Computer (6) (z. B. ein PDA, ein personal digital assistant) verwendet. Dieser weist einen Infrarot-Sender (7) auf, der eine nach dem IrDA-Standard arbeitende Infrarot-Schnittstelle bildet.

Die zur Programmierung der Herdsteuerung (2) notwendigen Daten werden vom Infrarot-Sender (7) zum Infrarot-Empfänger (3) übermittelt und über die Datenschnittstelle (4) in den programmierbaren Speicher (5) geschrieben.

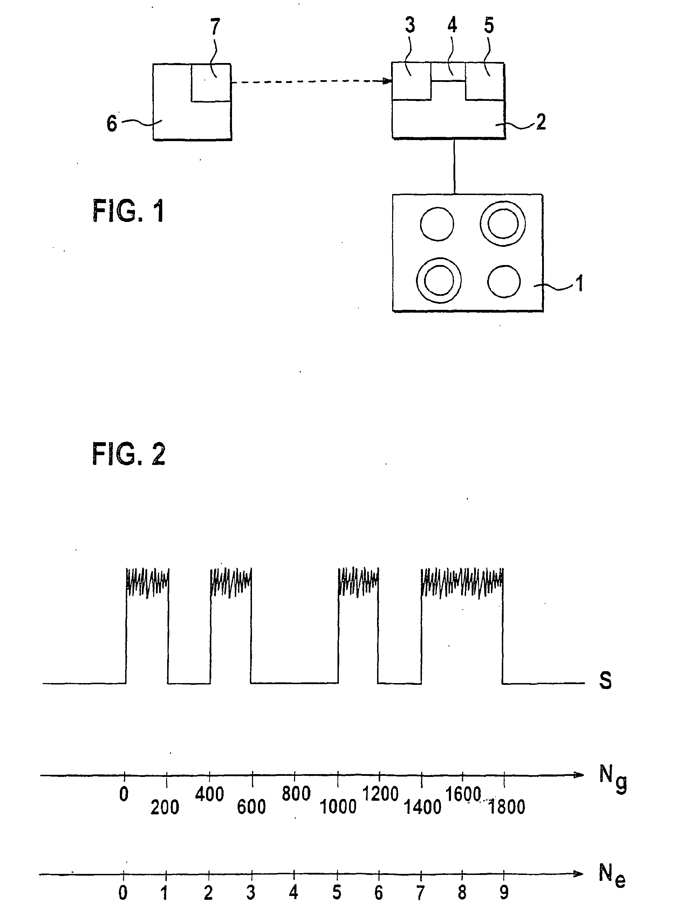

Aus Figur 2 ist ein Beispiel eines übertragenen Signals S sowie die dazu vom Sender ausgesandte Anzahl N_{g} von Bits und die vom Empfänger (3) empfangene Anzahl Nₑ von Bits ersichtlich.

Der Sender (7) arbeitet mit einer hohen Baudrate von 40.000 bps, der Empfänger (3) mit einer niedrigen Baudrate von 200 bps. Zur Übertragung eines HIGH-Bits sendet der Infrarot-Sender (7) 200 Bits, die aus Gruppen von jeweils 10 Bits (ein Startbit (HIGH), 8 Datenbits (HIGH), ein Stopbit (LOW) bestehen (siehe Figur 2). Der Infrarot-Empfänger (3) liest während der Zeit, in der der Sender (7) einen Burst von 200 Bits sendet, lediglich einen Bit aus, wobei über die gesendeten Bits gemittelt bzw. integriert wird und so ein HIGH-Bit empfangen wird.

Zur Übertragung eines LOW-Bits wird der Sender (7) für die entsprechende Zeit über eine Schleifenfunktion im Ansteuerungsprogramm ausgeschaltet.

Die Erfindung ermöglicht es, dass das Steuergerät (2) auch nach Einbau in das Gehäuse eines Elektroherdes programmiert werden kann (z. B. zum Abgleich auf den Typ des Elektroherdes, d. h. u. a. auf die Anzahl der Kochplatten, Einkreis- und Zweikreiskochplatten oder zur Verwirklichung der vom Benutzer gewünschten Bedienungsfunktionen).

## Patentansprüche

1. Verfahren zur drahtlosen Datenübertragung, bei dem mittels eines Infrarot-Senders (7) digitale Daten zu einem Infrarot-Empfänger (3) übermittelt werden,
**dadurch gekennzeichnet,**
**dass** die Übertragungsgeschwindigkeit des Senders (7) ein Mehrfaches der Übertragungsgeschwindigkeit des Empfängers (3) beträgt und der Empfänger (3) zum Empfang eines Datenbits über mehrere gesendete Datenbits mittelt, und
**dass** der Sender (7) zur Übertragung eines zu empfangenden digitalen 1-Wertes (HIGH-Bit) eine Anzahl von Signalen sendet, die überwiegend aus digitalen 1-Werten (HIGH-Bits) bestehen, während er zur Übertragung eines zu empfangenden digitalen 0-Wertes (LOW-Bit) eine Anzahl von Signalen sendet, die überwiegend aus digitalen 0-Werten (LOW-Bits) bestehen.

2. Verfahren nach Anspruch 1,
**dadurch gekennzeichnet,**
**dass** der Sender (7) zur Übertragung eines digitalen 0-Wertes (LOW-Bit) gar kein Signal sendet.

3. Verfahren nach einem der Ansprüche 1 bis 2,
**dadurch gekennzeichnet,**
**dass** die Anzahl der gesendeten Signale pro zu empfangendem Wert dem Verhältnis zwischen den Übertragungsgeschwindigkeiten des Senders und des Empfängers entspricht.

4. Verfahren nach einem der vorherigen Ansprüche,
**dadurch gekennzeichnet,**
**dass** der Sender (7) mit einer Übertragungsgeschwindigkeit zwischen 10.000 und 40.000 bps und der Empfänger (3) mit einer Übertragungsgeschwindigkeit zwischen 100 und 200 bps arbeiten.

5. Verfahren zur drahtlosen Programmierung eines Steuergerätes (2), wobei digitale Daten mittels des Verfahren nach einem der Ansprüche 1 bis 5 übertragen werden und das Steuergerät (2) durch diese Daten programmiert wird.

6. Verfahren nach Anspruch 5,
**dadurch gekennzeichnet,**
**dass** das Steuergerät (2) eine sensorgeführte Herdsteuerung ist, dass zur Programmierung der Herdsteuerung ein mobiler, eine IrDA-Schnittstelle aufweisender Computer (6) Anwendung findet, dass zum Datenempfang ein Infrarotsensor (3) der Herdsteuerung (2) verwendet wird und dass die Programmierung zum Abgleich der Herdsteuerung (2) mit dem angeschlossenen Herd (1) erfolgt.

7. Steuergerät zur Durchführung des Verfahrens nach Anspruch 5 oder 6, welches einen Infrarot-Empfanger (3), eine Datenschnittstelle (4) und einen programmierbaren Speicher (5) aufweist.

8. Steuergerät nach Anspruch 7,
**dadurch gekennzeichnet,**
**dass** das Steuergerät (2) eine sensorgeführte Herdsteuerung ist.

## Claims

1. Method for wireless data transmission, in which an infrared transmitter (7) is used to transmit digital data to an infrared receiver (3),
**characterized**
**in that** the transmission speed of the transmitter (7) is a multiple of the transmission speed of the receiver (3), and the receiver (3) receives the data bit by averaging over a plurality of sent data bits, and
**in that** the transmitter (7) transmits a digital 1 value (HIGH bit) which is to be received by sending a number of signals which predominantly comprise digital 1 values (HIGH bits), whereas it transmits a digital 0 value (LOW bit) which is to be received by sending a number of signals which predominantly comprise digital 0 values (LOW bits).

2. Method according to Claim 1,
**characterized**
**in that** the transmitter (7) transmits a digital 0 value (LOW bit) by sending no signal at all.

3. Method according to one of Claims 1 and 2,
**characterized**
**in that** the number of signals sent per value which is to be received corresponds to the ratio between the transmission speeds of the transmitter and the receiver.

4. Method according to one of the preceding claims,
**characterized**
**in that** the transmitter (7) operates at a transmission speed of between 10 000 and 40 000 bps, and the receiver (3) operates at a transmission speed of between 100 and 200 bps.

5. Method for wirelessly programming a control unit (2), where digital data are transmitted using the method according to one of Claims 1 to 4 and the control unit (2) is programmed by these data.

6. Method according to Claim 5,
**characterized**
**in that** the control unit (2) is a sensor-driven stove controller, in that the stove controller is programmed using a mobile computer (6) having an IrDA interface,
**in that** data are received using an infrared sensor (3) in the stove controller (2), and in that the programming is performed in order to align the stove controller (2) with the connected stove (1).

7. Control unit for carrying out the method according to Claim 5 or 6, which has an infrared receiver (3), a data interface (4) and a programmable memory (5).

8. Control unit according to Claim 7,
**characterized**
**in that** the control unit (2) is a sensor-driven stove controller.

## Revendications

1. Procédé de transmission de données sans fil, selon lequel on transmet des données numériques au moyen d'un émetteur infrarouge (7) vers un récepteur infrarouge (3), **caractérisé en ce que** la vitesse de transmission de l'émetteur (7) représente plusieurs fois la vitesse de transmission du récepteur (3) **en ce que** pour la réception d'un bit de données, le récepteur (3) moyenne plusieurs bits de données émis, et **en ce que** pour la transmission d'une valeur numérique 1 à recevoir (bit HAUT), l'émetteur (7) émet un certain nombre de signaux qui sont essentiellement constitués de valeurs numériques 1 (bits HAUT) alors que pour la transmission d'une valeur numérique 0 à recevoir (bit BAS), émet un certain nombre de signaux qui sont essentiellement constitués de valeurs numériques 0 (bits BAS).

2. Procédé selon la revendication 1, **caractérisé en ce que** pour la transmission d'une valeur numérique 0 (bit BAS), l'émetteur (7) n'émet aucun signal.

3. Procédé selon une des revendications 1 à 2, **caractérisé en ce que** le nombre de signaux émis par valeur à recevoir correspond au rapport entre les vitesses de transmission de l'émetteur et du récepteur.

4. Procédé selon une des revendications précédentes, **caractérisé en ce que** l'émetteur (7) fonctionne avec une vitesse de transmission comprise entre 10000 et 40000 bps et le récepteur (3) avec une vitesse de transmission comprise entre 100 et 200 bps.

5. Procédé pour la programmation sans fil d'un appareil de commande (2), selon lequel des données numériques sont transmises au moyen du procédé selon une des revendications 1 à 4 et selon lequel on programme l'appareil de commande (2) au moyen de ces données.

6. Procédé selon la revendication 5, **caractérisé en ce que** l'appareil de commande (2) est une commande de cuisinière pilotée par capteur, **en ce qu'**on peut utiliser un ordinateur (6) mobile possédant une interface IrDA pour la programmation de la commande de cuisinière, **en ce qu'**on utilise un capteur infrarouge (3) de la commande de cuisinière (2) pour la réception des données et **en ce qu'**on effectue la programmation pour équilibrer la commande de cuisinière (2) avec la cuisinière raccordée (1).

7. Appareil de commande pour l'exécution du procédé selon la revendication 5 ou 6 comportant un capteur infrarouge (3), une interface de données (4) et une mémoire programmable (5).

8. Appareil de commande selon la revendication 7, **caractérisé en ce que** l'appareil de commande (2) est une commande de cuisinière pilotée par capteur.
